# EUROPEAN PATENT APPLICATION

(11) **EP 4 620 926 A1**
(43) Date of publication of application: **24.09.2025**
(21) Application number: 25162721.2
(22) Date of filing: 10.03.2025
(51) Int. Cl.: C03B 23/043, C03B 23/045, C03B 23/047

(54) **QUARTZ GLASS ROD AND MANUFACTURING METHOD THEREOF**

(30) Priority: 12.03.2024 JP 2024038138
(71) Applicant: SHIN-ETSU CHEMICAL CO., LTD., Tokyo 1000005 (JP)
(72) Inventor: MIZUKAMI, Hiromasa, Kamisu-shi, 314-0102 (JP)
(74) Representative: Vossius & Partner Patentanwälte Rechtsanwälte mbB

(57) **Abstract**

An object of the present invention is to improve productivity by omitting the strain removal process in the manufacturing process of quartz glass rods and to provide a method of leaving strain that does not cause substantial damage in the event that cracks occur in quartz glass rods after shipment due to the effects of residual strain. A manufacturing method of a quartz glass rod according to the present invention involves obtaining a quartz glass rod of a predetermined diameter by gradually drawing the quartz glass rod through multiple drawing processes. In the manufacturing method of the quartz glass rod, during the multiple drawing processes, the bending of one or more portions of the quartz glass rod drawn by a glass processing lathe is corrected by heating the portions with a burner flame to soften them and bring the bending amount within a specified range.

## Description

### TECHNICAL FIELD

The present invention relates to a quartz glass rod obtained by drawing a glass base material to a predetermined outer diameter using a lathe for glass processing with a burner (hereinafter referred to as a glass lathe) and a method for manufacturing the same.

### TECHNICAL FIELD

In the process of manufacturing a quartz glass rod by heating the glass base material with a burner flame on a glass lathe, the quartz glass rods manufactured will be strained in multiple locations due to heating by the burner flame.

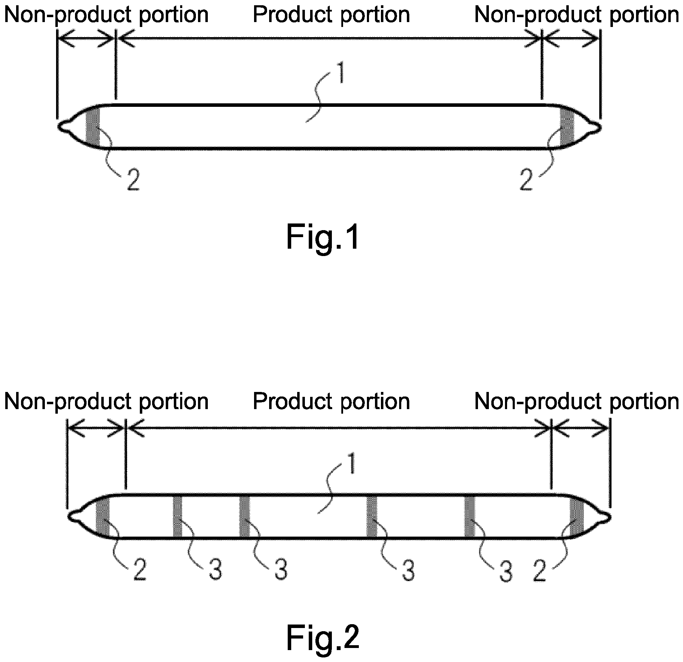

Figs. 1 and 2 show the strain that occurs in the quartz glass rod 1. When removing the quartz glass rod from the glass lathe after it has been drawn, the product portion with the specified length is removed by thermally cutting off both ends with a burner flame. The strain that occurs at both ends due to the burner flame during the thermal cutting process is strain 2 due to thermal cutting. Fig. 1 schematically shows a quartz glass rod with strain 2 due to thermal cutting left on both ends.

Fig. 2 schematically shows a quartz glass rod with strain 2 due to thermal cutting left at both ends, as in Fig. 1, and in addition, strain 3 due to bending correction left in the middle part. In some cases, the "bending amount" is specified as a dimensional tolerance for quartz glass rods, and if the bend amount exceeds the specified value after the rods have been drawn to the specified outer diameter, the rods are softened locally with a burner flame to correct the bend. During this bending correction, strain 3 caused by the bending correction occurs at the position heated by the burner flame. The position and number of bending corrections, in other words, the position and number of strain 3 caused by bending corrections, differ for each quartz glass rod depending on the shape of the bend.

If local strain is left in quartz glass rods in the form shown in Figs. 1 or 2, vibration or temperature changes after shipment may cause cracking. Conventionally, the process of removing localized strain was added at the last stage of the quartz glass rod manufacturing process with the intention of avoiding cracks caused by strain. Known methods for removing strain include heating with a burner flame in a glass lathe by sequentially moving the burner from one end to the other or using an annealing furnace.

One possible way to simplify the manufacturing process of quartz glass rods and improve productivity is to omit the strain removal process. However, in that case, the product will be shipped with a local strain still present, so there is still a risk that the product will crack after shipping, as mentioned above.

### SUMMARY OF THE INVENTION

### PROBLEM TO BE SOLVED BY THE INVENTION

The present invention was made in light of the above problems, and it aims to improve productivity by omitting the strain removal process in the manufacturing process of quartz glass rods and to provide a method of leaving strain that does not cause substantial damage in the event that cracks occur in quartz glass rods after shipment due to the effects of residual strain.

### MEANS FOR SOLVING THE PROBLEM

In order to solve the above problem, the manufacturing method of a quartz glass rod related to one embodiment of the present invention involves obtaining the quartz glass rod of a predetermined diameter by gradually drawing the quartz glass rod through multiple drawing processes. The manufacturing method of the quartz glass rod is characterized in that, during the multiple drawing processes, the bending of one or more portions of the quartz glass rod drawn by a glass processing lathe is corrected by heating the portions with a burner flame to soften them and bring the bending amount within a specified range.

In this way, the strain that occurs in the middle of the quartz glass rod due to bending correction is removed by subsequent drawing, leaving strain only at the two ends. As a result, the possibility of cracking in the middle section after shipment can be reduced.

In the present invention, the bending correction is performed immediately before the final drawing process of the multiple drawing processes. In this way, the number of drawing processes after the bending correction can be minimized, and the worsening of the bending amount can be suppressed.

The manufacturing method of a quartz glass rod related to one embodiment of the present invention involves obtaining the quartz glass rod of a predetermined diameter by gradually drawing the quartz glass rod through multiple drawing processes. In the manufacturing method of the quartz glass rod, after the final drawing process in the multiple drawing processes, one or more parts of the drawn quartz glass rod are heated with a burner flame to soften it and correct the bending amount to within the specified range. The heating amount during the bending correction is adjusted so that the strain that occurs in the middle of the quartz glass rod due to the bending correction is smaller than the strain that occurs at both ends of the quartz glass rod when the quartz glass rod is thermal cut. The heating amount for correcting the bend may be less than the heating amount for thermal cutting the quartz glass rod.

In this way, if a crack occurs after shipping, it is more likely that the two ends, which are more strained, will crack, and the possibility of a crack occurring at the position of the strain due to the bending correction of the middle part can be kept to an extremely low.

A quartz glass rod related to an embodiment of the present invention has been drawn to a specified outer diameter using a glass-processing lathe and has strain only at both ends.

A quartz glass rod related to another embodiment of the present invention has been processed using a glass processing lathe to draw the glass base material to a predetermined outer diameter and has multiple points of strain at both ends and in the middle, with the strain in the middle being smaller than the strain at both ends.

### EFFECTS OF THE INVENTION

The strain removal process is omitted from the manufacturing process of quartz glass rods, thereby improving the productivity of quartz glass rods. On the other hand, damage caused by cracks that occur due to residual strain in the product can be avoided or greatly reduced through the way the strain is left.

### BRIEF DESCRIPTION OF THE DRAWINGS

Fig. 1 schematically shows a quartz glass rod with strain 2 due to thermal cutting left on both ends.
Fig. 2 schematically shows a quartz glass rod with strain 2 due to thermal cutting left at both ends and, in addition, strain 3 due to bending correction left in the middle part.
Fig. 3 shows how strain 3 caused by the bending correction performed during the gradual drawing is removed by subsequent drawing.

### EMBODIMENTS OF THE INVENTION

Hereinafter, embodiments of the present invention will be described in detail, but the present invention is not limited thereto.

Fig. 1 schematically shows a quartz glass rod with strain 2 due to thermal cutting left on both ends. In the case of the strain shown in Fig. 1, only strain 2 caused by thermal cutting occurs. The position where strain 2 due to thermal cutting occurs is within the range defined as non-product portions, where the outer diameter varies due to thermal cutting. Even if cracks occur in the strained portions at both ends, there is no substantial damage because it is damage to the non-product portions. Therefore, as in this case, if the quartz glass rod has strain only at both ends, it can be judged that there is no problem in omitting the strain removal process and finishing the manufacturing process with the strain remaining at both ends, and shipping the product.

Fig. 2 schematically shows a quartz glass rod with strain 2 due to thermal cutting left at both ends, as in Fig. 1, and in addition, strain 3 due to bending correction left in the middle part. In the case of the strain shown in Fig. 2, the product portion (middle portion) of the quartz glass rod has strain 3 due to bending correction, so if the product is shipped without performing the strain removal process, there is a possibility that the product portion will crack and cause damage.

In the present embodiment, bending correction is performed during multiple drawing processes as a processing method that does not leave strain 3 due to bending correction, even if the strain removal process is omitted.

Usually, the bending correction is performed after the drawing is completed to the specified outside diameter to avoid the bending amount worsening again after the correction. In many cases, drawing is performed in two or more stages, depending on the difference between the outer diameter of the glass base material and the specified outer diameter, as well as the required outer diameter fluctuation tolerance. For example, if the diameter of the glass base material before drawing is 100 mm in diameter and the specified diameter of the quartz glass rod to be manufactured is 60 mm in diameter, the processing procedure is to draw it to 65 mm in diameter in the first drawing and finish it to the specified diameter of 60 mm in the second drawing. Typically, after the drawing is complete up to the specified diameter of 60 mm, the bending is corrected to bring the bending amount within the specified range. If the strain removal process is not included after the bending correction is complete in this procedure, the strain caused by the bending correction will remain in the product portion (middle portion) of the quartz glass rod.

In contrast, in the present embodiment, when the specified outer diameter is achieved through two stages of drawing, the bend is corrected between the first and second drawing. The strain that occurs in the product portion due to the bending correction is removed by heating with the burner flame during the second drawing process. In other words, the second drawing process also serves as a strain removal process. Therefore, if the bending is corrected using this procedure, the strain in the product portion can be avoided even without the strain removal process after the drawing is completed.

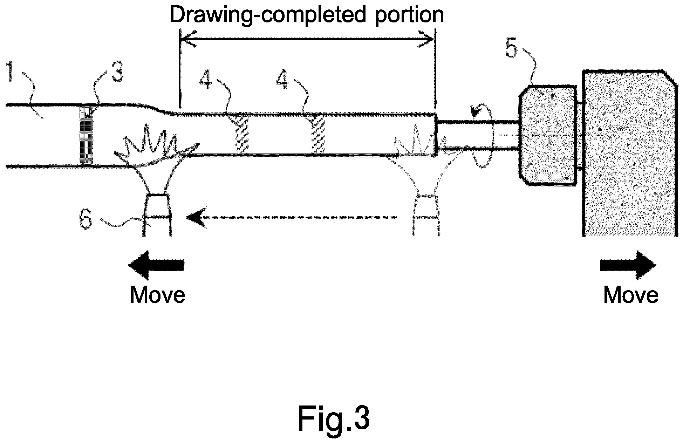

Fig. 3 shows how the strain 3 caused by the bending correction performed during the gradual drawing is removed by subsequent drawing. Drawing using a glass lathe is a process in which the burner 6 is moved from one end to the other while simultaneously moving the lathe chuck 5, which grips the quartz glass rod 1, in the opposite direction of the burner 6 to sequentially form the quartz glass in the heated section to the target outside diameter. The strain that occurs in one or more locations in the product portion of the quartz glass rod due to bending correction is entirely removed by heating with the burner flame during drawing (reference number 4 in Fig. 3).

By drawing after correcting the bend, the corrected bending amount may worsen due to the subsequent drawing. Therefore, it is preferable to correct bending during gradual drawing before the final drawing. For example, if the drawing is performed in three stages, the bending can be corrected after the second stage of drawing is completed, and the drawing that is performed after the bending correction is completed can be limited to the third stage of drawing, which is performed to finish the specified outer diameter, to minimize the worsening of the bending amount.

Even if bending is corrected before the final drawing, the bending amount caused by the final drawing cannot be completely eliminated, so it is necessary to correct the bending in anticipation of the worsening of the bending amount in the subsequent drawing. Therefore, it is necessary to correct the bending amount to a smaller than the amount that would be corrected after the drawing is completed using the normal procedure. It may be difficult to handle products with strict requirements for the tolerance of the bending amount using this procedure.

When it is necessary to meet strict specifications of the bending amount, the bending is corrected after the drawing is completed, similarly to the conventional method. Note, however, that the bending correction is carried out under processing conditions where the strain caused by the bending correction is smaller than the strain caused by the thermal cutting at both ends. This greatly reduces the risk of cracking in the product portion due to strain caused by bending correction after shipping.

The gas flow rate and heating time of the burner during the bending correction process are adjusted appropriately, and the burner heating conditions are set so that the heating amount during the bending correction process is sufficiently smaller than the heating amount during the thermal cutting at both ends. If the strain removal process after the bending correction is omitted, the strain caused by the bending correction will remain in the product portion. However, as mentioned above, by adjusting the heating amount applied by the burner, the strain will be sufficiently smaller than the strain caused by the thermal cutting of both ends. If cracks occur after shipping in this manner of strain, the possibility of cracks occurring at the location where greater strain remains due to the thermal cutting of the end is high, and the possibility of cracks occurring at the location of strain due to the bending correction of the product portion can be kept extremely low.

The extent of strain remaining in the quartz glass rod can be estimated from the heating conditions using the burner, but if the polarized light strain inspection device is used, it is easy to recognize the extent of strain due to thermal cutting and strain due to bending correction.

As a method of avoiding cracks in the product portion due to residual strain caused by bending correction, while omitting the strain removal process in order to improve the productivity of quartz glass rods, a method in which bending correction is performed during gradual drawing and the strain in the product portion due to bending correction is removed by drawing after correction was explained, as well as a method in which the strain caused by bending is made smaller than the strain caused by thermal cutting at both ends, thereby reducing the risk of cracks in the product portion due to strain caused by bending. When deciding which of these two methods to use, it may be a useful idea to consider a number of factors, such as the amount of damage that would be caused if the product were cracked and the degree of tolerance required for the bending amount.

The above is an explanation of the embodiments of the present invention, but the above embodiments are examples, and any embodiment that has substantially the same configuration as the technical concept described in the claims of the present invention and achieves similar effects is included in the technical scope of the present invention.

### EXPLANTATION OF REFERENCE NUMERALS

1 Quartz glass rod
2 Strain due to thermal cutting
3 Strain due to bending correction
4 Strain due to bending correction removed by drawing
5 Lathe chuck
6 Lathe burner

## Claims

1. A manufacturing method of a quartz glass rod for obtaining a quartz glass rod of a predetermined diameter by gradually drawing the quartz glass rod through multiple drawing processes, wherein during the multiple drawing processes, the bending of one or more portions of the quartz glass rod drawn by a glass processing lathe is corrected by heating the portions with a burner flame to soften them and bring the bending amount within a specified range.

2. The manufacturing method of a quartz glass rod according to claim 1, wherein the bending correction is performed immediately before the final drawing process of the multiple drawing processes.

3. A manufacturing method of a quartz glass rod for obtaining a quartz glass rod of a predetermined diameter by gradually drawing the quartz glass rod through multiple drawing processes, wherein
after the final drawing process in the multiple drawing processes, one or more parts of the drawn quartz glass rod are heated with a burner flame to soften it and correct the bending amount to within the specified range, and
the heating amount during the bending correction is adjusted so that the strain that occurs in the middle of the quartz glass rod due to the bending correction is smaller than the strain that occurs at both ends of the quartz glass rod when the quartz glass rod is thermal cut.

4. The manufacturing method of a quartz glass rod according to claim 3, wherein the heating amount for correcting the bend is less than the heating amount for thermal cutting the quartz glass rod.

5. A quartz glass rod that has been drawn to a specified outer diameter using a glass processing lathe, and that has strain only at both ends.

6. A quartz glass rod that has been processed using a glass processing lathe to draw the glass base material to a predetermined outer diameter, and that has multiple points of strain at both ends and in the middle, with the strain in the middle being smaller than the strain at both ends.
